# EUROPEAN PATENT SPECIFICATION

(11) **EP 1 114 423 B1**
(45) Date of publication and mention of the grant of the patent: **28.02.2007**
(21) Application number: 99948269.8
(22) Date of filing: 17.09.1999
(51) Int. Cl.: G21D 3/04

(54) **DIGITAL PLANT PROTECTION SYSTEM**
DIGITALES KRAFTWERKSSCHUTZSYSTEM
SYSTEME NUMERIQUE DE PROTECTION DE CENTRALE

(30) Priority: 18.09.1998 US 101004 P
(43) Date of publication of application: 11.07.2001
(73) Proprietor: Westinghouse Electric Company LLC, Pittsburgh, PA 15230-0355 (US)
(72) Inventor: BROWN, Edgar, Mel, West Suffield, CT 06093 (US); KESSLER, Frank, Martin, Jr., Suffield, CT 06078 (US); MANAZIR, Richard, Michael, Jr., North Canton, CT 06059 (US); SENECHAL, Raymond, Robert, East Hartford, CT 06118 (US)
(74) Representative: Luckhurst, Anthony Henry William
(86) International application number: PCT/US1999/021364
(87) International publication number: WO 2000/017888

(56) References cited:
- US-A- 4 427 620
- US-A- 4 562 035
- US-A- 4 661 310
- US-A- 4 687 623

## Description

### Cross References to Related Applications

This application is related to and claims priority on the basis of U.S. Provisional Application No. 60/101,004, filed on September 18, 1999.

This application is a continuation in part of, and also related to subject matter disclosed in copending U.S. Pat. Applications Serial Nos. 09/069,869, filed on April 30, 1998, (Attorney Docket No. ABB-164, C970270) and 09/076,094, filed on June 6, 1997, (Attorney Docket No. ABB-165, C970330).

### FIELD OF THE INVENTION

The present invention relates to the field of nuclear power plants. More specifically, the present invention relates to an improved monitoring system for monitoring nuclear power plant operation and effecting emergency safety procedures in the event plant operations exceed established parameters. Still more specifically, this invention relates to an improved Engineered Safety Features (ESF) Component Control System (CCS) for a Digital Plant Protection System (DPPS).

### BACKGROUND OF THE INVENTION

For safety, nuclear power plants include complex monitoring or "plant protection" systems. These systems monitor the operation of the nuclear reactor and the power plant in general. If any portion of the reactor or other important functions of the plant that is being monitored exceed established safe parameters, the plant protection system can effect emergency procedures, such as shutting down the reactor, to prevent complications from arising.

Additionally, plant protection systems are designed to be redundant and self-validating so that any malfunctions that arise will be identified before they result in serious problems, For example, for a particular monitoring function of the plant protection system, two or more redundant systems may be provided. The redundant systems monitor the same parameter or perform the same calculations. The outputs of the redundant systems are then compared to verify the proper functioning of all the systems. Disagreement between redundant systems signals a potential problem. US Patents Nos. 4,427,620; 4,562,035; 4,461,310 and 4,687,623 disclose plant protection systems with multiple, redundant logic channels for nuclear power plants. US Patent Nos. 4,427,620 and 4,687,623 disclose component control systems wherein each logic channel comprises a bistable processor, a coincidence processor, a component control system processors and an interface and test processor.

Many of the existing nuclear power plants have been in operation for some time and employ plant protection systems that are aging or obsolete in comparison with modern technology. For example, most existing plant protection systems for nuclear power plants are Solid State Protection Systems ("SSPS") which employ an extensive network of discrete digital electronics, mechanical switches and electro-mechanical relays. These relays and switches having moving parts which are actuated using electromagnetism to effect the necessary connections between the various parts of the plant protection system.

In an SSPS system, two redundant logic channels may be provided to monitor a single parameter of the nuclear power plant's operation. If one channel fails, the other channel maintains the necessary monitoring function.

Given the service age of many of the components of such solid state systems, increasing failure rates are expected as the components begin to exhibit the normal problems associated with the end phase of the product life cycle. For example, industry reliability models predict an increasing failure rate for electro-mechanical relays of the type and vintage in question due to stuck and pitted contacts or open coils.
These failures will obviously threaten the reliability of the plant protection system and the safety of the nuclear power plant being protected.

Additionally, the coincidence logic in an SSPS for checking the coincidence between redundant monitoring systems is performed by custom circuit cards that are generally obsolete. For example, these cards typically employ Motorola High Threshold Logic (MHTL) circuits. Industry reports indicate that MHTL circuits are susceptible to aging failures that can result in intermittent logic levels. Thus, increasing age and the complexity of the existing logic circuitry can result in decreased system reliability, increased trouble shooting difficulty and decreased plant availability due to the unnecessary activation of emergency shut down and other emergency response mechanisms.

Consequently, there is a need in the art for an improved plant protection system. More particularly, there is a need in the art for an improved plant protection system that makes use of current technology to provide high reliability throughout an extended life cycle.

The two cited copending parent applications to this application respectively disclose an all-digital logic Digital Plant Protection System (DPPS) and a Digital Engineering Safety Features Actuation System (DESFAS) which act as an interface between a Plant Protection System (DPP) and Engineered Safety Features (ESF) in a nuclear power plant. Such nuclear plant safety systems have multiple channels, each channel having bistable functions, with local coincidence testing systems. Such channels exist to interconnect a main control room, a remote shutdown panel, an interface and test processor (an ITP net) through a control network (16), such as a Westinghouse AF 100 Net. It nevertheless is desired in such a system to increase the speed of actuation through a High Speed Serial Link (HSSL), or Actuation Net HSSL, diverse from the AF 100 Net which overrides upon actuation.

### SUMMARY OF THE INVENTION

It is an object of the present invention to meet the above-described needs and others. Specifically, it is an object of the present invention to provide an improved emergency response system operating on the data provided by the plant protection system. More particularly, it is an object of the present invention to provide an improved emergency response system that makes use of current technology to provide high reliability throughout an extended life cycle. Still more particularly, it is an overall object of this invention to increase speed of actuation through an HSSL Actuation Link diverse from an Actuation network which ovrides upon actuation.

Additional objects, advantages and novel features of the invention will be set forth in the description which follows or may be learned by those skilled in the art through reading these materials or practicing the invention. The objects and advantages of the invention may be achieved through the means recited in the attached claims.

To achieve these stated and other objects, the present invention may be embodied and described as an engineered safety features component control system which receives signals from a digital plant protection system that is monitoring parameters of the plant operation. The system includes two or more, preferably four, logic channels monitoring a particular parameter of the plant operation. Each of the logic channels includes a bistable processor for receiving input from the digital plant protection system relating to the particular parameter which the logic channel is to monitor and for determining if that particular parameter of the plant operation is within predetermined safe limits.

A coincidence processor is associated with each bistable processor for comparing an output of the bistable processor with outputs from bistable processors in the others logic channels. One or more component control system processors receive the output of each coincidence processor and actuate the components of the emergency response systems based on that output.

Each logic channel includes a second, redundant bistable processor that receives input and performs functions identical to those of the other bistable processor in the channel. A second coincidence processor is provided in connection with the second bistable processor. The second coincidence processor receives output from the second bistable processor and compares that output with output from other corresponding redundant bistable processors in the other logic channels. The output from the second coincidence processor is also provided to the component control system processors or controllers which actuate the components of the emergency response systems based on the output of both of the coincidence processors.

The system of the present invention also preferably includes an inter-channel fiber optic network for communicating output from the bistable processors of the various logic channels to the coincidence processors of the other logic channels. A second fiber optic network is used to connect each of the component control system processors to the main control room of the power plant that is protected by the plant protection system. Fiber optic communications are preferred for their resistance to electromagnetic interference (EMI) and other forms of interference.

The system of the present invention also preferably includes a test and interface processor that is connected via a test network to the bistable processors, the coincidence processors and the component control system processors. The test and interface processor is capable of testing the system or delivering signals to the component control system processor or processors for actuating the components of the emergency response systems, through an Actuation Net HSSL 10 to control the Control Net AF 100.

The system of the present invention may also include a remote shutdown panel connected to the fiber optic network between the main control room and the component control system processors. The remote shutdown panel that is so connected can be used for delivering signals to the component control system processors to actuate the components of the emergency response systems if the main control room becomes uninhabitable.

The present invention also encompasses a method of implementing an engineered safety features component control system which receives signals from a digital plant protection system that is monitoring parameters of plant operation. The method preferably includes the steps of providing two or more redundant logic channels monitoring a particular parameter of the plant operation, performing redundant processing within each of the logic channels on input from the digital plant protection system relating to that particular parameter, and, based on the processing, making two independent determinations of whether that particular parameter of the plant operation is within predetermined safe limits.

### BRIEF DESCRIPTION OF THE DRAWINGS

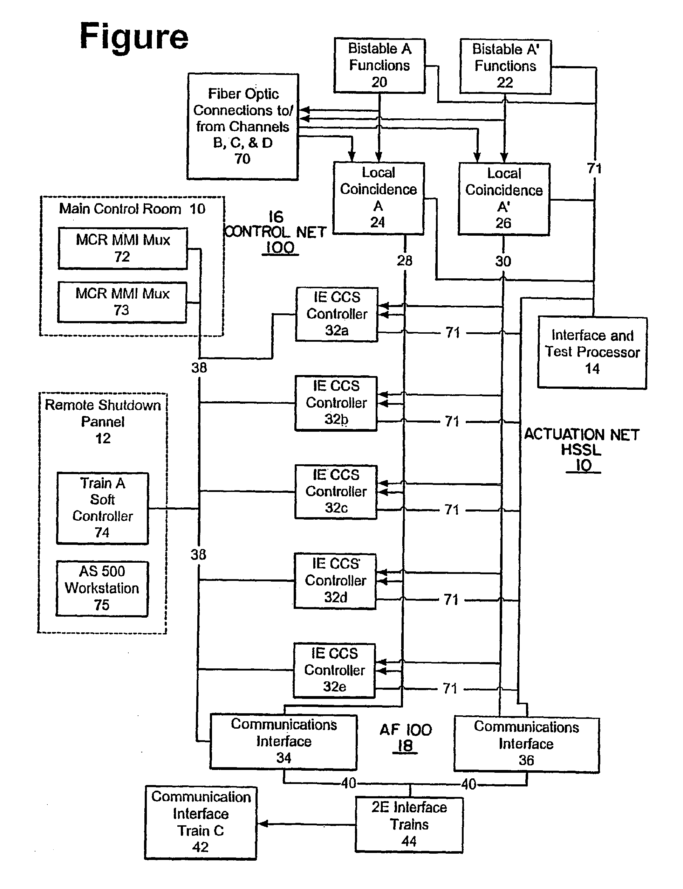

The accompanying drawing illustrates the present invention and is a part of the specification. Together with the following description, the drawing demonstrates and explains the principles of the present invention.

The Figure is a block diagram of an Engineered Safety Features Component Control System ("ESF-CCS") of a Digital Plant Protection System ("DPPS") according to the present invention.

### DETAILED DESCRIPTION OF THE PREFERRED EMBODIMENTS

Using the drawing, the preferred embodiments of the present invention will now be explained. The Figure illustrates a single logic channel which, in combination with at least one other identical redundant channel, monitors a particular parameter of the operation of a nuclear power plant and effects an emergency response in the event the monitored parameter varies beyond established safe limits.

In the preferred embodiment of the present invention, the Figure illustrates an Actuation Net HSSL 16 having a first channel, i.e. channel A, of a four channel set. The four channels, A, B, C, and D are all identical and monitor the same parameter. For simplicity, only channel A is illustrated in the Figure. Some signals and functions may use fewer channels.

Logic channel A as illustrated in the Figure begins with a bistable processor (20) that receives input from the sensors of the digital plant protection system (DPPS) (not shown) to monitor a particular parameter of the operation of the nuclear power plant. An example of a parameter being monitored is the temperature of the reactor. In such a case, the bistable processor (20) performs change-in-temperature calculations. The bistable processor (20) then outputs a signal that indicates that the monitored parameter is, or is not, within the acceptable safe limits.

The other logic channels B, C & D monitor the same parameter, preferably at different locations within the power plant. The output of the bistable processor (20) is provided over a fiber optic network (70) to the other three logic channels B, C & D. The results of the monitoring on channels B, C & D are also provided over the fiber optic network (70) to logic channel A.

Fiber optic networks, such as those shown (70) and (38--described below), are preferred in the application of a nuclear power plant protection system due to their immunity to environmental factors such as electromagnetic interference (EMI). Fiber optic networks are also resistant to other forms of interference, cross-talk, signal leakage, and the like.

The output of the bistable processor (20) is also provided to a local coincidence logic processor (24). Preferably, the connection between the bistable processor (20) and the coincidence processor (24) includes redundant HSSL data links.

The coincidence processor (24) will check to see if the determination of the bistable processor (20) that the monitored parameter is or is not within the established safe range agrees with the determination made by the bistable processors of the other logic channels B, C & D. The results of the coincidence check are output on line (28).

As illustrated in the Figure, line (28) connects the coincidence logic processor (24) to a series of component control system ("CCS") controllers or processors (32a to 32e), together acting as a part of a Control Net AF 100, shown at reference numeral 16. These controllers (32), based on the output of the coincidence processor (24) and, in one embodiment, from at least one additional channel (B, C or D, connection not shown), actuate emergency response systems when appropriate. For example, the CCS controllers (32a to 32e) each operate switchgear and motor control centers to control pumps, fans, dampers, valves, solenoids and motor operated valves that constitute the emergency response systems of the power plant. These components actuated by the CCS controllers (32a to 32e) are preferably separated into groups and allocated to different cabinets for increased robustness to a single failure.

In general, the CCS controllers (32a to 32e) each control sixteen components of the emergency response systems and provide analog input associated with related systems. Some of the CCS controllers (32a to 32e) are preferably redundant with redundant outputs controlling a single interposing relay. This enhances the reliability of the system.

An external reset of emergency response systems may also be made by interfacing with the coincidence processor (24) through interface processor (14). A reset signal is then sent over line (28) to the CCS controllers (32).

The output of the coincidence processor (24) on line (28) is also provided to a communications interface (34) which is, in turn, connected via a fiber optic network (38) to the main control room (10) of the power plant. An indication of the results of the monitoring on channel A can therefore be displayed or indicated to plant operators in the main control room.

In addition to the redundancy provided by the four logic channels A to D, each channel is internally redundant under the principles of the present embodiment. Specifically, a second bistable processor (22), identical to the first bistable processor (20), is provided to duplicate the work of the first bistable processor (20). The output of the redundant bistable processor (22) is provided to a second logic coincidence processor (26) as well as being transmitted over the HSSL fiber optic network (70) to the other three logic channels B, C & D.

The redundant coincidence processor (26) also receives, via fiber optic network (70), an output signal from corresponding redundant bistable processors in each of the other logic channels B, C & D. The coincidence processor (26) then compares the output of the bistable processor (22) to the incoming signals from channels B, C & D. The results of this comparison are output to the series of CCS controllers (32a to 32e).

The CCS controllers (32a to 32e) will then activate the necessary emergency response equipment. As a precaution, the controllers (32) may only activate an emergency response when both of the local coincidence processors (24 and 26) are indicating a dangerous condition detected by both bistable processors (20 and 22) and confirmed by the counterpart bistable processors in the other three logic channels B, C & D.

Line (30) also connects the output of the redundant coincidence processor (26) to a communications interface (36) which is connected by line (40) to the communications interface (34) and, ultimately, the main control room (10). By way of example, the communications interfaces (34 and 36) may be AC 160 units. The line (40) also includes a fiber optic connection to the 2E interface trains (44) which, in turn, connects to the communication interface of train C (42).

The series of CCS controllers (32a to 32e) are also connected through the fiber optic network (38) to the main control room (10) and a remote shut down panel (12). This connection is provided so that the emergency response functions controlled by the CCS controllers (32a to 32e) can be manually activated from the control room (10) or from the remote shutdown panel (12) in the event that the main control room (10) is uninhabitable.

Alternatively, the fiber optic cable network (71) of the test processor (14) can be interfaced to provide another system for actuating emergency response measures through the CCS controllers (32a to 32e). Finally, each CCS controller (32a to 32e) may have a manual means (not shown) located with the processor itself for initiated the emergency response measures.

The main control room (10), as shown in the Figure, may include a pair of MCR MMI multiplexers (72 and 73) for handling the various signals provided to and from the main control room by the logic channels A to D. The remote shut down panel (12) includes a train A soft controller (74) and a workstation, preferably an AS 500 workstation (75).

Finally, a test bus (71) is provided to connect various components of the logic channel to an interface and test processor (14). For example, both of the bistable processors (20 and 22), the coincidence processors (24 and 26) and the CCS controllers (32a to 32e) are connected over the bus (71) to the test processor (14). The test processor (14) is also connected via the bus (71) to the communications interface (36). In this way, the test processor can be used to test the various components of the logic channel to which it is connected.

A maintenance and test panel (not shown) that is provided in an ESF-CCS cabinet with the interface and test processor (14) may provide the same control and status display capability as the flat panel display of the main control room (10). The maintenance and test panel can also provide test results and allow manual testing of the system.

The present invention provides the following benefits and advantages. First, the response time between the time when sense input is provided to the bistable processor and the signaling of the CCS processors for initiation of trip circuits for emergency response is less than or equal to 300 milliseconds. The use of signal multiplexing and data communication networking minimizes cost and promotes simplicity during a phased installation. The separation of control and monitoring functions avoids data communication bottlenecks, maintains simple control system designs and reduces the potential for operator error.

The availability of the system is enhanced through improved design. Automatic testing functions are available. The system is flexible for expansion and upgrading to meet new requirements. Fewer spare parts and less training are required as compared to conventional plant protection systems.

There are also many redundant systems within the system of the present invention. There are four independent channels for each parameter from the process sensor through and including the initiation circuits for tripping emergency response devices. Within each channel, communications are redundant and diverse. Automatic and manual actuation are accomplished through different signal paths for diversity.

Each ESF-CCS train controls one ESF system train and there are four redundant ESF-CCS trains used to operate four (or less) totally redundant ESF trains. Where redundancy exists at the plant system level, component assignments to redundant ESF-CCS trains are made to maintain that level of design redundancy.

Functional diversity is also achieved by segmenting the components into separate groups controlled by separated CSS controllers (32), each having inputs in circuit with both of the local coincidence processors anad the interface and test processor. Segmentation is used to minimize the impact of a component failure on system operation. Segmentation removes multiple control monitoring functions from a single large processor and distributes them over many smaller processors, which limits the impact of a processor failure.

There is also diversity of actuation. The primary trip path is the actuation data link (28). Manual back-up trip from the main control room (10) is via the communications network (38). The back-up manual trip path is the test network (71).

The preceding description has been presented only to illustrate and describe the invention. It is not intended to be exhaustive or to limit the invention to any precise form disclosed. Many modifications and variations are possible in light of the above teaching.

The preferred embodiment was chosen and described in order to best explain the principles of the invention and its practical application. The preceding description is intended to enable others skilled in the art to best utilize the invention in various embodiments and with various modifications as are suited to the particular use contemplated. It is intended that the scope of the invention be defined by the following claims.

## Claims

1. An engineered safety features component control system which receives signals from a digital plant protection system monitoring parameters of plant operation comprises:
a plurality of logic channels (A-D) monitoring a particular parameter of said plant operation, wherein each of said logic channels (A-D) comprises;
a bistable processor (20) for receiving input from said digital plant protection system relating to said particular parameter and determining if said particular parameter of said plant operation is within predetermined safe limits;
a coincidence processor (24) for comparing an output of said bistable processor (20) with outputs from bistable processors in other channels (B-D) of said plurality of logic channels (A-D); and
at least one component control system processor (32a) for receiving output from said coincidence processor (24) for said channel (A) and actuating components of emergency response systems based thereon; and
an interface and test processor (14) connected to at least one bistable processor (20), said coincidence processor (24), and said component control system processor (32a),
**characterised in that** each of said logic channels (A-D) comprises:
a second, redundant bistable processor (22) which is arranged to receive input and perform functions identical to those of the first bistable processor (20); and
a second coincidence processor (26) which is arranged to receive output from said second bistable processor (22) and compare that output with output from redundant bistable processors in other channels (B-D) of said plurality of logic channels (A-D);
wherein output from said second coincidence processor (26) is also provided to said at least one component control system processor (32a) which is arranged to actuate said components of said emergency response systems based on output of both of said coincidence processors (24, 26).

2. The system of claim 1, wherein said at least one component control system processor (32) comprises a plurality of component control system processors each for controlling a predetermined group of emergency response devices.

3. The system of claim 1, further comprising an inter-channel fiber optic network (70) for communicating output from said bistable processors (20, 22) among said coincidence processors (24, 26) of said plurality of channels.

4. The system of claim 1, wherein the test and interface processor (14) is connected via a test network to said bistable processors (20, 22), said coincidence processors (24, 26) and said at least one component control system processor (32).

5. The system of claim 4, wherein said test and interface processor (14) is capable of testing said system or delivering signals to said at least one component control system processor (32) for actuating said components of said emergency response systems.

6. The system of claim 1, further comprising a fiber optic network (70) connecting each of said at least one component control system processors (32) to a main control room (10) of a power plant protected by said plant protection system.

7. The system of claim 6, further comprising a remote shutdown panel (12) connected to said fiber optic network (70) for delivering signals to said at least one component control system processor (32) to actuate said components of said emergency response systems.

8. A method of implementing an engineered safety features component control system which receives signals from a digital plant protection system monitoring parameters of plant operation, the method being **characterised by**:
providing a plurality of redundant logic channels (A-D) monitoring a particular parameter of said plant operation;
performing redundant processing within each of said logic channels (A-D) on input from said digital plant protection system relating to said particular parameter;
based on said processing, making two independent determinations of whether said particular parameter of said plant operation is within predetermined safe limits; and
controlling plant operation and shutdown with a plurality of controllers (32) in accordance with said two independent determinations and an output of an interface and test processor (14).

9. The method of claim 8, further comprising separately comparing both of said determinations with similar determinations from others (B-D) of said plurality of logic channels (A-D).

10. The method of claim 9, further comprising actuating components of emergency response systems based on said comparisons.

11. The method of claim 10, wherein said actuating components of said emergency response systems further comprises providing a plurality of component control system processors (32) each controlling a predetermined group of emergency response devices.

12. The method of claim 11, further comprising at least one redundant component control system processor (32).

13. The method of claim 8, wherein said redundant processing is performed with first and second bistable processors (20, 22) and said making two independent determinations is performed with first and second coincidence processors (24, 26).

14. The method of claim 8, further comprising interconnecting said plurality of logic channels (A-D) with a fiber optic network (70) for communicating said determinations of whether said particular parameter of said plant operation is within predetermined safe limits between said logic channels (A-D).

15. The method of claim 8, further comprising actuating components of emergency response devices based on said determinations.

16. The method of claim 15, further comprising providing a redundant system for actuating said components of said emergency response devices independently of said determinations of whether said particular parameter is within said safe limits.

17. The system of claim 1, wherein the at least one component control system processor is also for receiving output from at least one additional channel (B, C or D).

## Patentansprüche

1. Komponentensteuersystem für sicherheitstechnische Einrichtungen, das Signale von einem digitalen Anlagenschutzsystem empfängt, das Parameter des Anlagenbetriebs überwacht, umfassend:
eine Mehrheit logischer Kanäle (A-D), die einen speziellen Parameter des Anlagenbetriebs überwachen, wobei jeder der logischen Kanäle (A-D) umfasst;
einen bistabilen Prozessor (20) zum Empfangen von Eingabe vom digitalen Anlagenschutzsystem, die sich auf besagten speziellen Parameter bezieht und zum Bestimmen, ob der spezielle Parameter des Anlagenbetriebs innerhalb vorbestimmter Sicherheitsgrenzwerte liegt;
einen Koinzidenzprozessor (24) zum Vergleichen einer Ausgabe des bistabilen Prozessors (20) mit Ausgaben von bistabilen Prozessoren in anderen Kanälen (B-D) der Mehrheit logischer Kanäle (A-D); und
mindestens einen Komponenten-Steuersystemprozessor (32a) zum Empfangen von Ausgabe vom Koinzidenzprozessor (24) des Kanals (A) und Betätigen von Komponenten der Notfallreaktionssysteme, die darauf beruhen; und
einen Schnittstellen- und Prüfprozessor (14), der mit mindestens einem bistabilen Prozessor (20), besagtem Koinzidenzprozessor (24) und besagtem Komponenten-Steuersystemprozessor (32a) verbunden ist,
**dadurch gekennzeichnet, dass** jeder der logischen Kanäle (A-D) umfasst:
einen zweiten, redundanten bistabilen Prozessor (22), der eingerichtet ist, Eingabe zu empfangen und Funktionen auszuführen, die mit jenen des ersten bistabilen Prozessors (20) identisch sind; und
einen zweiten Koinzidenzprozessor (26), der eingerichtet ist, Ausgabe vom zweiten bistabilen Prozessor (22) zu empfangen und diese Ausgabe mit Ausgabe von redundanten bistabilen Prozessoren in anderen Kanälen (B-D) der Mehrheit von logischen Kanälen (A-D) zu vergleichen;
wobei Ausgabe vom zweiten Koinzidenzprozessor (26) ebenso dem mindestens einen Komponenten-Steuersystemprozessor (32a) bereitgestellt wird, der eingerichtet ist, besagte Komponenten der Notfallreaktionssysteme, beruhend auf Ausgabe beider besagter Koinzidenzprozessoren (24, 26), zu betätigen.

2. System nach Anspruch 1, wobei der mindestens eine Komponenten-Steuersystemprozessor (32) eine Mehrheit von Komponenten-Steuersystemprozessoren, jeder zum Steuern einer vorbestimmten Gruppe von Notfallreaktionsvorrichtungen, umfasst.

3. System nach Anspruch 1, das weiter ein Interkanal-Faseroptiknetz (70) zum Kommunizieren von Ausgabe von den bistabilen Prozessoren (20, 22) unter den Koinzidenzprozessoren (24, 26) der Mehrheit von Kanälen umfasst.

4. System nach Anspruch 1, wobei der Prüf- und Schnittstellenprozessor (14) über ein Prüfnetz an die bistabilen Prozessoren (20, 22), die Koinzidenzprozessoren (24, 26) und den mindestens einen Komponenten-Steuersystemprozessor (32) angeschlossen ist.

5. System nach Anspruch 4, wobei der Prüf- und Schnittstellenprozessor (14) fähig ist, das System zu prüfen oder Signale an den mindestens einen Komponenten-Steuersystemprozessor (32) zum Betätigen der Komponenten der Notfallreaktionssysteme zu liefern.

6. System nach Anspruch 1, das weiter ein Faseroptiknetz (70) umfasst, das jeden der mindestens einen Komponenten-Steuersystemprozessoren (32) mit einer Hauptkontrollraum (10) eines Kraftwerks verbindet, das durch das Anlagenschutzsystem geschützt ist.

7. System nach Anspruch 6, das weiter eine fernbediente Abschalttafel (12) umfasst, die an das Faseroptiknetz (70) zum Liefern von Signalen an den mindestens einen Komponenten-Steuersystemprozessor (32) angeschlossen ist, um Komponenten der Notfallreaktionssysteme zu betätigen.

8. Verfahren der Implementierung eines Komponentensteuersystems für sicherheitstechnische Einrichtungen, das Signale von einem digitalen Anlagenschutzsystem empfängt, das Parameter des Anlagenbetriebs überwacht, wobei das Verfahren durch Folgendes **gekennzeichnet** ist:
Bereitstellen einer Mehrheit redundanter logischer Kanäle (A-D), die einen speziellen Parameter des Anlagenbetriebs überwachen;
Durchführen redundanter Verarbeitung in jedem der logischen Kanäle (A-D) bei Eingabe vom digitalen Anlagenschutzsystem, die sich auf den speziellen Parameter bezieht;
beruhend auf besagter Verarbeitung, Treffen von zwei unabhängigen Bestimmungen, ob der spezielle Parameter des Anlagenbetriebs innerhalb vorbestimmter sicherer Grenzwerte liegt; und
Steuern von Anlagenbetrieb und Abschaltung mit einer Mehrheit von Steuereinheiten (32) in Übereinstimmung mit den zwei unabhängigen Bestimmungen und einer Ausgabe eines Schnittstellen- und Prüfprozessors (14).

9. Verfahren nach Anspruch 8, das weiter getrenntes Vergleichen beider der Bestimmungen mit ähnlichen Bestimmungen anderer (B-D) der Mehrheit logischer Kanäle (A-D) umfasst.

10. Verfahren nach Anspruch 9, das weiter Betätigen von Komponenten von Notfallreaktionssystemen, auf den Vergleichen beruhend, umfasst.

11. Verfahren nach Anspruch 10, wobei die Betätigungskomponenten der Notfallreaktionssysteme weiter eine Mehrheit von Komponenten-Steuersystemprozessoren (32) umfassen, die jeweils eine vorbestimmte Gruppe von Notfallreaktionsvorrichtungen steuern.

12. Verfahren nach Anspruch 11, das weiter mindestens einen redundanten Komponenten-Steuersystemprozessor (32) umfasst.

13. Verfahren nach Anspruch 8, wobei das redundante Verarbeiten mit ersten und zweiten bistabilen Prozessoren (20, 22) durchgeführt wird und das Treffen von zwei unabhängigen Bestimmungen mit ersten und zweiten Koinzidenzprozessoren (24, 26) durchgeführt wird.

14. Verfahren nach Anspruch 8, das weiter Zwischenverbinden der Mehrheit logischer Kanäle (A-D) mit einem Faseroptiknetz (70) zum Kommunizieren besagter Bestimmungen umfasst, ob der spezielle Parameter des Anlagenbetriebs innerhalb sicherer Grenzwerte zwischen den logischen Kanälen (A-D) liegt.

15. Verfahren nach Anspruch 8, das weiter Betätigen von Komponenten von Notfalkeaktionsvorrichtungen, auf besagten Bestimmungen beruhend, umfasst.

16. Verfahren nach Anspruch 15, das weiter Bereitstellen eines redundanten Systems zur Betätigung der Komponenten der Notfallreaktionsvorrichtungen unabhängig von den Bestimmungen umfasst, ob der spezielle Parameter innerhalb der sicheren Grenzwerte liegt.

17. System nach Anspruch 1, wobei der mindestens eine Komponenten-Steuersystemprozessor außerdem zum Empfangen von Ausgabe von mindestens einem zusätzlichen Kanal (B, C oder D) ist.

## Revendications

1. Système de commande des composants de systèmes de sécurité qui reçoit des signaux depuis un système de protection de centrale numérique contrôlant des paramètres de fonctionnement de la centrale comprenant :
une pluralité de canaux logiques (A-D) contrôlant un paramètre particulier dudit fonctionnement de la centrale, dans lequel chacun desdits canaux logiques (A-D) comprend:
un processeur bistable (20) pour recevoir l'entrée depuis le système de protection de centrale numérique concernant ledit paramètre particulier et déterminant si ledit paramètre particulier dudit fonctionnement de la centrale est dans lesdites limites prédéterminées ;
un processeur de coïncidence (24) pour comparer une sortie dudit processeur bistable (20) à des sorties de processeurs bistables dans d'autres canaux (B-D) de ladite pluralité de canaux logiques (AD) ; et
au moins un processeur de système de commande des composants (32a) pour recevoir la sortie depuis ledit processeur de coïncidence (24) pour ledit canal (A) et actionner des composants de systèmes de réponse d'urgence en fonction de celle-ci ; et
un processeur d'interface et de test (14) connecté à au moins un processeur bistable (20), au dit processeur de coïncidence (24), et au dit processeur de système de commande des composants (32a),
**caractérisé en ce que** chacun desdits canaux logiques (A-D) comprend :
un second processeur bistable (22), redondant qui est agencé pour recevoir l'entrée et réaliser des fonctions identiques à celles du processeur bistable (20) ; et
un second processeur de coïncidence (26) qui est agencé pour recevoir la sortie dudit second processeur bistable (22) et comparer cette sortie avec la sortie de processeurs bistables redondants dans d'autres canaux (B-D) de ladite pluralité de canaux logiques (A-D) ;
dans lequel la sortie venant dudit second processeur de coïncidence (26) est aussi fournie au dit au moins un processeur de système de commande des composants (32a) qui est agencé pour actionner lesdits composants desdits systèmes de réponse d'urgence en fonction de la sortie à la fois desdits deux processeurs de coïncidence (24, 26).

2. Système selon la revendication 1, dans lequel ledit au moins un processeur de système de commande des composants (32) comprend une pluralité de processeurs de système de commande des composants chacun pour commander un groupe prédéterminé de dispositifs de réponse d'urgence

3. Système selon la revendication 1, comprenant en outre un réseau de fibres optiques (70) inter-canaux pour communiquer la sortie desdits processeurs bistables (20, 22) parmi lesdits processeurs de coïncidence (24, 26) de ladite pluralité de canaux.

4. Système selon la revendication 1, dans lequel le processeur d'interface et de test (14) est connecté via un réseau de test auxdits processeurs bistables (20, 22), auxdits processeurs de coïncidence (24, 26) et au dit au moins un processeur de système de commande des composants (32).

5. Système selon la revendication 4, dans lequel ledit processeur d'interface et de test (14) peut tester ledit système ou délivrer des signaux au dit au moins un processeur de système de commande des composants (32) pour actionner lesdits composants desdits systèmes de réponse d'urgence.

6. Système selon la revendication 1, comprenant en outre un réseau de fibres optiques (70) connectant chacun des au moins un processeur de système de commande des composants (32) à une salle de commande principale (10) d'une centrale nucléaire protégée par ledit système de protection de centrale.

7. Système selon la revendication 6, comprenant en outre un panneau d'arrêt à distance (12) connecté au dit réseau de fibres optiques (70) pour délivrer des signaux au dit au moins un processeur de système de commande des composants (32) pour actionner lesdits composants desdits systèmes de réponse d'urgence.

8. Procédé de mise en oeuvre d'un système de commande des composants de systèmes de sécurité qui reçoit des signaux depuis un système de protection de centrale numérique contrôlant des paramètres de fonctionnement, le procédé étant **caractérisé par** :
fournir une pluralité de canaux logiques (A-D) contrôlant un paramètre particulier dudit fonctionnement de la centrale:
réaliser un traitement redondant dans chacun des canaux logiques (A-D) sur l'entrée depuis ledit système de protection de centrale numérique concernant ledit paramètre particulier ;
en fonction du traitement, faire deux déterminations indépendantes de si ledit paramètre particulier dudit fonctionnement de la centrale est dans lesdites limites de sécurité prédéterminées ; et
commander le fonctionnement et l'arrêt de la centrale avec une pluralité de commandes (32) selon deux déterminations indépendantes et une sortie d'un processeur d'interface et de test (14).

9. Procédé selon la revendication 8, comprenant en outre de comparer séparément les deux dites déterminations à des déterminations similaires d'autres (B-D) de ladite pluralité de canaux logiques (A-D).

10. Procédé selon la revendication 9, comprenant en outre d'actionner des composants de systèmes de réponse d'urgence en fonction desdites comparaisons.

11. Procédé selon la revendication 10, dans lequel ledit actionnement des composants desdits systèmes de réponse d'urgence comprend en outre de fournir une pluralité de processeurs de système de commande des composants (32) commandant chacun un groupe prédéterminé de dispositifs de réponse d'urgence.

12. Procédé selon la revendication 11, comprenant en outre au moins un processeur de système de commande des composants (32) redondant.

13. Procédé selon la revendication 8, dans lequel ledit traitement redondant est réalisé avec des premier et second processeurs bistables (20, 22) et faire lesdites deux déterminations est réalisé avec des premier et second processeurs de coïncidence (24, 26).

14. Procédé selon la revendication 8, comprenant en outre d'interconnecter ladite pluralité de canaux logiques (A-D) avec un réseau de fibres optiques (70) pour communiquer lesdites déterminations de si ledit paramètre particulier dudit fonctionnement de la centrale est dans des limites de sécurité prédéterminées entre lesdits canaux logiques (A-D).

15. Procédé selon la revendication 8, comprenant en outre d'actionner des composants de dispositifs de réponse d'urgence en fonction desdites détermination.

16. Procédé selon la revendication 15, comprenant en outre de fournir un système redondant pour actionner lesdits composants desdits dispositifs de réponse d'urgence indépendamment desdites déterminations de si le paramètre particulier est dans lesdites limites de sécurité.

17. Système selon la revendication 1, dans lequel l'au moins un processeur de système de commande des composants est aussi pour recevoir la sortie d'au moins un canal supplémentaire (B, C ou D).
